# EUROPÄISCHE PATENTSCHRIFT

(11) **EP 3 093 178 B1**
(45) Veröffentlichungstag und Bekanntmachung des Hinweises auf die Patenterteilung: **27.12.2017**
(21) Anmeldenummer: 15167128.6
(22) Anmeldetag: 11.05.2015
(51) Int. Cl.: B60K 15/07, B60K 15/063

(54) **TANKSYSTEM FÜR EIN FAHRZEUG**
TANK SYSTEM FOR A VEHICLE
SYSTÈME DE RÉSERVOIR POUR UN VÉHICULE

(43) Veröffentlichungstag der Anmeldung: 16.11.2016
(73) Patentinhaber: Salzburger Aluminium Aktiengesellschaft, 5651 Lend (AT)
(72) Erfinder: Lind, Christoph, 5671 Bruck (AT)
(74) Vertreter: Weiser, Andreas

(56) Entgegenhaltungen:
- EP-A2- 2 287 458
- US-A- 5 658 013
- US-A1- 2014 069 972
- US-A1- 2014 137 953

## Beschreibung

Die vorliegende Erfindung betrifft ein Tanksystem für ein Fahrzeug, umfassend einen ersten und einen zweiten Druckbehälter, die an verschiedenen Stellen eines Chassis des Fahrzeugs, insbesondere an gegenüberliegenden Seiten des Chassis, montierbar sind, wobei zumindest eine Anschlussleitung des zweiten Behälters zu jener Stelle des Chassis, an der sich der erste Behälter befindet, geführt ist und in einer dort zugänglichen Armatur mündet.

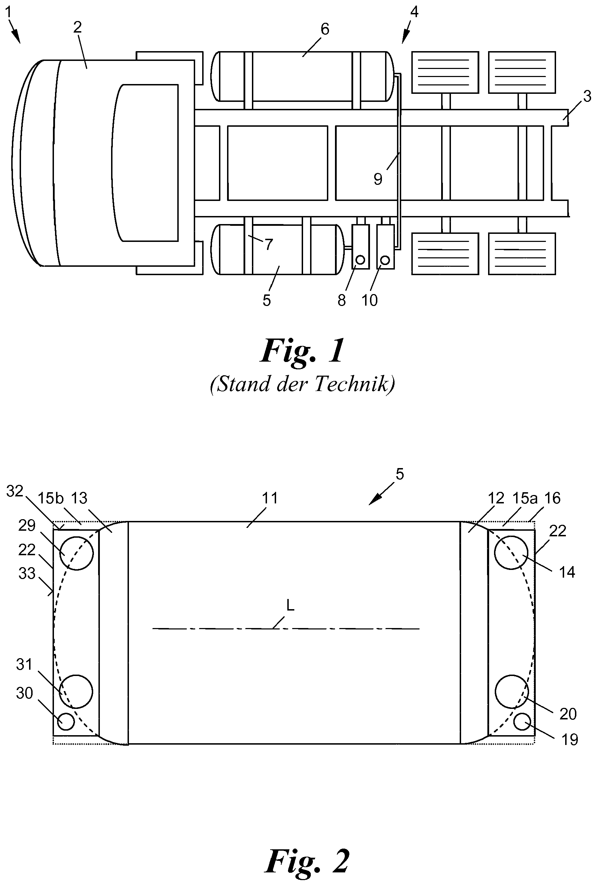

Aus dem Stand der Technik ist bekannt, erdgasbetriebene Nutzfahrzeuge mit Doppeltankanlagen auszustatten. Die beiden Tanks bzw. Behälter enthalten entweder verflüssigtes Erdgas (liquefied natural gas, LNG) bei Tiefsttemperaturen von etwa -160 °C bis -130 °C und vergleichsweise geringem Druck von etwa 1 bis 20 bar, oder stark komprimiertes Erdgas (compressed natural gas, CNG) unter hohem Druck von bis zu 200 bar. Auch Kombinationen von LNG- und CNG-Behältern sind im Einsatz. Zur Befüllung dieser Behälter sind eine Vielzahl aufwendiger und sperriger Armaturen notwendig: Für LNG-Behälter in der Regel zumindest eine Befüllkupplung, eine Druckanzeige und ein Ventanschluss mit Handventil zur Entgasung des Behälters, und für CNG-Behälter zumindest eine Befüllkupplung und eine Druckanzeige. Die Armaturen der Behälter werden nach dem Stand der Technik jeweils in Gehäusen untergebracht, welche jedoch viel Platz einnehmen. Fig. 1 zeigt dies im Detail.

In Fig. 1 ist ein Fahrzeug 1 mit Fahrerkabine 2 und Chassis 3 in der Draufsicht dargestellt. Das Fahrzeug 1 führt ein herkömmliches Tanksystem 4 mit zwei LNG-Behältern 5, 6 mit sich; der zweite Behälter 6 könnte aber auch ein CNG-Behälter sein. Der erste Behälter 5 ist mittels Tragkonsolen 7 am Chassis 3 angebracht und verfügt zur Betankung über Armaturen, die in einem Gehäuse 8 untergebracht sind. Um die Betankung des zweiten Behälters 6 möglichst einfach zu gestalten, d.h. das Betanken beider Behälter 5, 6 für den Fahrer oder Tankwart von derselben Fahrzeugseite aus zu ermöglichen, sind eine oder mehrere Anschlussleitung 9 des zweiten Behälters 6 quer durch das Chassis 3 hindurchgeführt und münden in Armaturen, die in einem zweiten Gehäuse 10 verbaut sind.

Der Bauraum in Nutzfahrzeugen ist jedoch stark begrenzt und die Notwendigkeit des zweiten Gehäuses 10 verringert den für den ersten Behälter 4 zur Verfügung stehenden Bauraum beträchtlich. Selbst wenn die beiden Gehäuse 8, 10 direkt nebeneinander montiert bzw. zu einem größeren Gehäuse vereint werden, bedeutet dies nur eine geringe Bauraumeinsparung.

Die Erfindung setzt sich zum Ziel, ein Tanksystem für ein Fahrzeug mit Doppeltankanlage zu schaffen, das den bestehenden Bauraum besser ausnutzt.

Dieses Ziel wird mit einem Tanksystem der einleitend genannten Art erreicht, das sich gemäß der Erfindung dadurch auszeichnet, dass sich die zumindest eine Armatur des zweiten Behälters zumindest teilweise in einem Zwickel befindet, der zwischen dem ersten Behälter und einem kleinstmöglichen, den ersten Behälter umschreibenden, gedachten Quader eingeschlossen ist.

Die Erfindung ermöglicht damit eine wesentlich bessere Ausnutzung des zur Verfügung stehenden Bauraums, indem Armaturen des Behälters, und zwar zumindest eine der Armaturen des gegenüberliegenden Behälters, in einem der Zwischenräume ("Zwickel"), die zwischen den Rundungen eines Druckbehältern und einem quaderförmigen Einbauraum verbleiben, angeordnet werden. Durch den solcherart eingesparten Platz, dem Wegfall des Gehäuses 10 in Fig. 1, kann der Behälter länger ausgeführt werden, womit das Volumen des mitgeführten Kraftstoffs signifikant erhöht werden kann.

Bevorzugt wird/werden auch die Anschlussleitung(en) der Armatur(en) des zweiten Behälters im Bereich des ersten Behälters durch den genannten Zwickel hindurchgeführt, was weiter Bauraum einspart. Die Anschlussleitung(en) kann/können dabei z.B. der Krümmung einer Endkappe des Behälters folgen.

In einer ersten Ausführungsform der Erfindung, in welcher der erste Behälter eine erste kalottenförmige Endkappe hat, ist der genannte Zwickel jener, der zwischen der Endkappe und dem Quader eingeschlossen ist ("Kappenzwickel"). Da Behälter für LNG hohen und für CNG höchsten Drücken ausgesetzt sind, haben diese oft eine Bauform mit solch kalottenförmigen Endkappen. Erfindungsgemäß wird diese gekrümmte Form ausgenutzt, um die Armaturen des zweiten Behälters an diesen Krümmungen unterzubringen.

Besonders bevorzugt hat der erste Behälter in dieser Ausführungsform auch eine der ersten gegenüberliegende zweite kalottenförmige Endkappe und zumindest eine weitere Armatur zumindest einer mit dem ersten Behälter verbundenen weiteren Anschlussleitung befindet sich in dem Zwickel, der zwischen dieser zweiten Endkappe und dem genannten Quader eingeschlossen ist. Indem die Armaturen an den beiden gegenüberliegenden Endkappen des Behälters zugänglich sind, wird ein besonders kompaktes Bauelement geschaffen, das die Armaturen beider Behälter platzsparend unterbringen kann.

In einer zweiten Ausführungsform der Erfindung, in welcher der erste Behälter einen allgemein-zylindrischen, bevorzugt kreiszylindrischen, Mantel hat, wie es bei Druckbehältern häufig der Fall ist, kann der genannte Zwickel aber auch jener sein, der zwischen dem Mantel und dem Quader eingeschlossen ist ("Mantelzwickel"). Die Armatur(en) kann/können so auch entlang des Behältermantels angeordnet werden, ohne einen quaderförmigen Einbauraum zu überragen. Abermals kann damit die Länge des ersten Behälters vergrößert werden, ohne an einer anderen Stelle des Fahrzeugs an Platz zu verlieren.

Bevorzugt kann sich dabei auch zumindest eine weitere Armatur zumindest einer mit dem ersten Behälter verbundenen weiteren Anschlussleitung in dem genannten Mantelzwickel befinden. Dies schafft eine Lösung, bei der die Armaturen sowohl des ersten als auch des zweiten Behälters an dessen Längsseite angebracht sind, um die Länge des ersten Behälters zu maximieren. Dies ermöglicht zudem Ausführungsformen, bei denen alle Armaturen des ersten und zweiten Behälters in einem gemeinsamen Gehäuse untergebracht sind.

Um die Armatur (en) unabhängig vom Tank zu fixieren, kann bzw. können diese von einem gesonderten, am Fahrzeugchassis montierbaren Träger getragen sein. Alternativ ist es jedoch auch möglich, den Träger am ersten Behälter zu befestigten. In beiden Fällen kann der Träger z.B. als Gehäuse ausgebildet sein, das gleich mehrere Armaturen beherbergt.

Ist/sind die Armatur(en) an einer Endkappe des ersten Behälters zugänglich, kann der Träger an der Endkappe montiert und mit einer bevorzugt D-förmigen Abdeckplatte mit Seitenwänden ausgestattet sein, die die Armatur(en) übergreift. Die Armaturen können dabei durch eine Öffnung in einer Seitenwand zugänglich sein. Die Abdeckplatte mit Seitenwänden kann so als ein Abdeckmodul ("Shroud") an der Endkappe angebracht werden. Bei einer D-förmigen Abdeckplatte, die optimal an Behälter mit D-förmigem Querschnitt angepasst ist, liegt die gerade Seite des "D" bevorzugt an der dem Fahrzeugchassis abgewandten Seite, um mit einer Fahrzeugwand zu fluchten und so den zur Verfügung stehenden Bauraum bestmöglich auszunutzen.

Ist/sind die Armatur(en) hingegen am Mantel des ersten Behälters zugänglich, kann der Träger am Mantel montiert und mit einer L-förmigen Abdeckplatte mit Seitenwänden ausgestattet sein, die die Armatur(en) übergreifen, welche dabei durch eine Öffnung in der Abdeckplatte zugänglich sein kann/können. Die beiden Behälter können dabei sehr eng nebeneinander oder sogar gemeinsam unter einer einzigen Abdeckplatte verbaut werden, was den Betankungskomfort erhöht.

Das erfindungsgemäße Tanksystem eignet sich für alle Arten von Drucktanks, seien sie LNG- oder CNG-Behälter. In einer Ausführungsform der Erfindung ist der zweite Behälter z.B. ein LNG-Behälter und für ihn sind drei Anschlussleitungen vorgesehen, von denen die erste als Armatur eine Befüllkupplung, die zweite eine Druckanzeige und die dritte einen Ventanschluss mit vorgeschaltetem Handventil hat. Dies ermöglicht, dass alle für einen LNG-Behälter notwendigen Armaturen gemeinsam am ersten Behälter zugänglich sind, z.B. in einem gemeinsamen Gehäuse. Weiters kann damit bevorzugt ein Doppel-LNG-Tanksystem geschaffen, wenn auch der erste Behälter als LNG-Behälter ausgebildet ist.

Alternativ ist der zweite Behälter durch einen oder bevorzugt ein Bündel von CNG-Behälter gebildet und dafür sind zwei Anschlussleitungen vorgesehen, von denen die erste als Armatur eine Befüllkupplung und die zweite eine Druckanzeige hat. Damit kann beispielsweise ein kombiniertes LNG- und CNG-Tanksystem geschaffen werden, wenn der erste Behälter ein LNG-Behälter ist.

Die Erfindung wird nachfolgend anhand von in den beigeschlossenen Zeichnungen dargestellten Ausführungsbeispielen näher erläutert. In den Zeichnungen zeigen:
Fig. 1 ein Tanksystem für ein Fahrzeug gemäß dem Stand der Technik in einer Draufsicht;
Fig. 2 eine erste Ausführungsform eines Tanksystems gemäß der Erfindung in einer schematischen Seitenansicht;
Fig. 3 das Tanksystem von Fig. 2 in einer ausschnittsweisen und teilweise aufgebrochenen Perspektivansicht;
Fig. 4 eine zweite Ausführungsform eines Tanksystems der Erfindung in einer schematischen Stirnansicht; und
Fig. 5 das Tanksystem von Fig. 4 in einer ausschnittsweisen Perspektivansicht.

Bezüglich Fig. 1, die den Stand der Technik zeigt, wird auf die Beschreibungseinleitung verwiesen, wobei sich in der nachstehenden Beschreibung der Fig. 2 - 5 gleiche Bezugszeichen auf gleiche Komponenten wie in Fig. 1 beziehen.

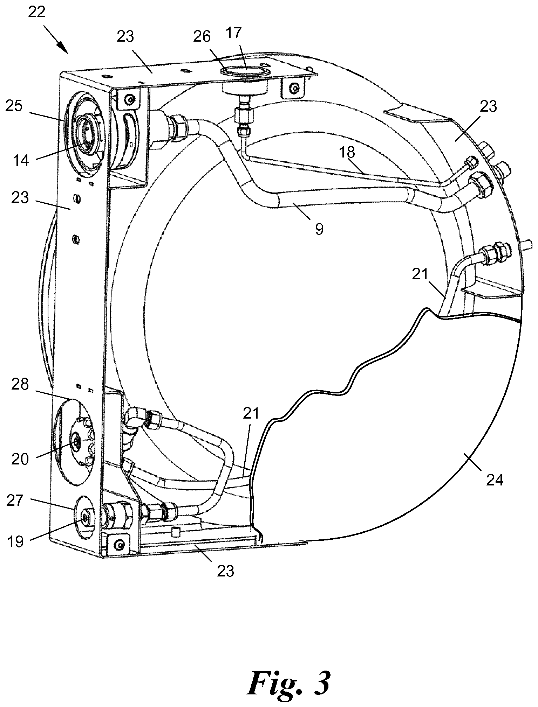

Die Fig. 2 und 3 zeigen eine erste erfindungsgemäße Ausführungsform des Tanksystems 4 anhand des ersten Behälters 5 und der daran verbauten Komponenten, wobei der zweite Behälter 6 und das Fahrzeug 1 aus Gründen der Übersichtlichkeit nicht dargestellt sind. Der erste und der zweite Behälter 5, 6 sind an verschiedenen Stellen, in der Regel an gegenüberliegenden Seiten, des Chassis 3 angeordnet, beispielsweise an der Fahrerseite und an der Beifahrerseite. Alternativ könnte der zweite Behälter 6 z.B. an jener Stelle bzw. Seite, die hinter der Fahrerkabine liegt, quer zur Fahrtrichtung angeordnet sein, oder an einer anderen Stelle des Chassis 3.

Der erste Behälter 5 ist in dieser Ausführungsform ein LNG-Behälter mit einem zylindrischen Mantel 11 und zwei z.B. angeschweißten kalottenförmigen Endkappen 12, 13. Der (in den Fig. 2 und 3 nicht dargestellte) zweite Behälter 6 ist z.B. ebenfalls eine LNG-Behälter und hat (zumindest) eine Anschlussleitung 9, die zu jener Stelle des Chassis 3, an der sich der erste Behälter 5 befindet, geführt ist und dort in einer Armatur 14, z.B. einer Betankungskupplung, mündet.

Durch die Krümmung der Endkappe 12 ergibt sich ein Zwischenraum bzw. Zwickel 15a ("Kappenzwickel") zwischen der Endkappe 12 und einem kleinstmöglichen, den ersten Behälter 5 umschreibenden, gedachten Quader 16, welcher gleichzeitig den am Fahrzeug 1 zur Verfügung stehenden quaderförmigen Einbauraum für den Behälter 5 beschreibt. Die Armatur 14 des zweiten Behälters 6 wird - zumindest teilweise - in diesem Zwickel 15a angeordnet und ist damit von der Fahrzeugseite des Behälters 5 her zugänglich. Weiters kann auch die genannte Anschlussleitung 9 im Bereich des ersten Behälters 5 durch den Zwickel 15a hindurchgeführt werden, siehe Fig. 3. Durch die Ausnutzung des Kappenzwickels 15a für die - zumindest eine - Armatur 14 und deren Anschlussleitung 9 können eine größere Länge und somit ein größeres Volumen des ersten Behälters 5 im Vergleich zu Fig. 1 erreicht werden.

Wie in Fig. 3 gezeigt, können auch weitere für den Betrieb des zweiten Behälters 6 erforderliche Armaturen - zumindest teilweise - im Kappenzwickel 15a angeordnet und ihre Anschlussleitungen durch die Kappenzwickel 15a hindurchgeführt werden. Wenn der zweite Behälter 6 ein LNG-Behälter ist, können dies insbesondere eine Druckanzeige 17 an einer Anschlussleitung 18 und ein Ventanschluss 19 mit vorgeschaltetem Handventil 20 an einer Anschlussleitung 21 sein, um den zweiten Behälter 6 zu entgasen. Wenn der zweite Behälter 6 ein CNG-Behälter ist, genügt neben der Betankungskupplung 14 in der Regel eine Druckanzeige 17.

Alle Armaturen 14, 17, 19, 20 können im Kappenzwickel 15a an einem gemeinsamen (oder mehreren einzelnen) am Fahrzeugchassis 3 montierten Träger(n) positioniert werden (in Fig. 3 nicht dargestellt), oder, wie in Fig. 3 gezeigt, von einem Träger 22 gehalten werden, der direkt an der Endkappe 12 montiert ist. Der Träger 22 kann z.B. mit der Endkappe 12 verschweißt, verschraubt oder verklebt oder auf diese und/oder den Mantel 11 mit Presspassung geklemmt werden.

Bevorzugt ist der Träger 22 - wie in Fig. 3 gezeigt - in Form etwa rahmenartig rund um die Endkappe 12 angeordneter Seitenwände 23 mit einer abnehmbaren oder fixierten Abdeckplatte 24 ausgebildet, die zusammen ein halboffenes, der Endkappe 12 zugewandtes Gehäuse ("Shroud") bilden. In den Seitenwänden 23 können Öffnungen 25, 26, 27, 28 vorgesehen sein, über welche die Armaturen 14, 17, 19, 20 zur Betankung zugänglich sind. Die Öffnungen 25, 26, 27, 28 können mit abnehmbaren Verschlussdeckeln (nicht gezeigt) ausgestattet sein.

In dem in Fig. 3 gezeigten Beispiel sind die Abdeckplatte 24 und die Seitenwände 25 in Richtung der Behälterlängsachse L gesehen etwa D-förmig. Alternativ könnten sie auch rund oder eckig sein, abhängig von der Form des Behälters 5 und der Anzahl bzw. Art der zu verkleidenden Armaturen 14, 17, 19, 20. Die Abdeckplatte 24 und Seitenwände 23 können auch in Richtung der Behälterlängsachse L gesehen fluchtend bzw. deckungsgleich mit dem ersten Behälter 5 ausgebildet sein, z.B. hat ein eckiger Behälter 5 mit kalottenförmigen Endkappen 12, 13 eine kongruent eckige Abdeckplatte 24.

Wie in Fig. 2 dargestellt, verfügt der erste Behälter 5 seinerseits über einen Satz von Armaturen, z.B. eine Befüllkupplung 29, eine Druckanzeige (nicht dargestellt) und einen Ventanschluss 30 mit Handventil 31 im Falle eines LNG Tanks. Die Armaturen 29, 30, 31 und ihre Anschlussleitungen können - spiegelbildlich zu Fig. 3 - in dem gegenüberliegenden Kappenzwickel 15b zwischen der anderen Endkappe 13 und dem gedachten Quader 16 angeordnet werden. Die Armaturen 29, 30, 31 des ersten Behälters 5 können von einem weiteren Träger 22 mit optionalen Seitenwänden 32 und Abdeckplatte 33 getragen bzw. umschlossen sein. Wie ersichtlich, hat der Zusammenschluss aus Behälter 5 samt Armaturen 14, 17, 19, 20 des zweiten Behälters 6 und seinen eigenen Armaturen 29, 30, 31 keine größere Länge als der erste Behälter 5 selbst, abgesehen von der Dicke der Abdeckplatten 24, 33.

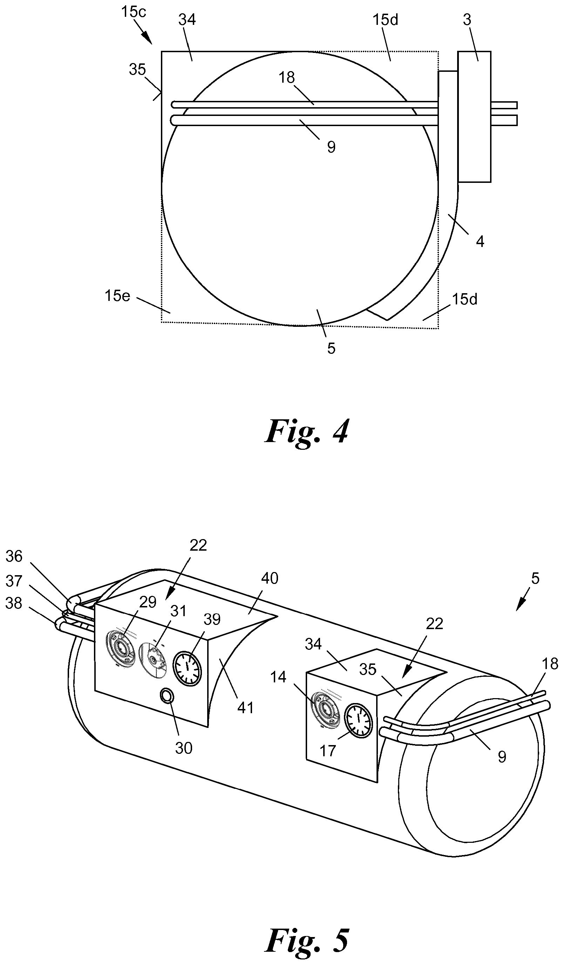

Die Fig. 4 und 5 zeigen eine alternative Ausführungsform, bei der sich einige oder alle Armaturen 14, 17 (im Falle eines CNG-Behälters 6) oder 14, 17, 19, 20 (im Falle eines LNG-Behälters 6) - zumindest teilweise - in einem der Zwischenräume bzw. Zwickel 15c, 15d, 15e, 15f befinden, die sich zwischen dem (hier: zylindrischen) Mantel 11 des ersten Behälters 5 und dem gedachten Quader 16 ergeben ("Mantelzwickel").

Bei einem kreiszylindrischen Mantel 11 ergeben sich vier Mantelzwickel 15c - 15e über den Umfang des Mantels 11 verteilt, und der gemäß den Fig. 4 und 5 gewählte Zwickel 15c liegt auf der oberen, dem Chassis abgewandten Seite des Mantels 11, was einen besonders leichten Zugang zu den Armaturen 14, 17 (bzw. gegebenenfalls 19, 20) ermöglicht. Eine Unterbringung der Armaturen in einem der anderen drei Zwickel 15d, 15e, 15f ist je nach Art und Anzahl der Armaturen ebenfalls möglich. Zudem können die Armaturen auch über zwei oder mehr verschiedene Mantelzwickel verteilt werden.

Wenn der erste Behälter 5 einen allgemein-zylindrischen, z.B. D-förmigen Querschnitt hat, kann es auch weniger als vier Mantelzwickel 15d - 15f geben, z.B. nur zwei Mantelzwickel auf der runden Seite des "D". Hat der erste Behälter 5 kalottenförmige Endkappen 12, 13, können die genannte(n) Anschlussleitung(en) 9, 18, 21 vom Mantelzwickel 15c auch durch die Kappenzwickel 15a, 15b hindurchgeführt werden, wie in Fig. 5 gezeigt, um noch mehr Bauraum einzusparen.

Bei der Ausführungsform der Fig. 4 und 5 können die Armaturen 14, 17 (bzw. gegebenenfalls 19, 20) abermals von einem am Fahrzeugchassis 3 montierten Träger (nicht gezeigt) oder aber von einem am Mantel 11 montierten Träger 22 gehalten werden. Der Träger 22 kann z.B. eine L-förmige Abdeckplatte 34 mit Seitenwänden 35 sein, welche die Armaturen 14, 17 (bzw. 19, 20) übergreifen und ein halboffenes, dem Mantel 11 zugewandtes Gehäuse bilden. Die Armaturen 14, 17, 19, 20 können dabei wieder durch Öffnungen in der Abdeckplatte 34 zugänglich sein.

Wie in Fig. 5 gezeigt, weist der erste Behälter 5 seinerseits Anschlussleitungen 36, 37, 38 auf, die in den genannten Armaturen 29, 30, 31 und einer Druckanzeige 39 münden. Die Armaturen 29, 30, 31, 39 des ersten Behälters 5 sind im selben Mantelzwickel 15c angeordnet wie die Armaturen 14, 17 (bzw. 19, 20) des zweiten Behälters 6, können jedoch auch in einem anderen der Mantelzwickel 15d - 15f positioniert werden. Auch ist es möglich, dass die Armaturen für den zweiten Behälter 6 in einem Mantelzwickel 15c - 15f und die Armaturen für den ersten Behälter 5 in einem Kappenzwickel 15a, 15b liegen und umgekehrt. Die Armaturen 29, 30, 31, 39 des ersten Behälters 5 können dabei wieder von einem Träger 22 aus einer L-förmigen Abdeckplatte 40 mit Seitenwänden 41 gehalten werden, oder es wird eine gemeinsame Abdeckplatte für alle Armaturen 14, 17, 19, 20, 29, 30, 31, 39 verwendet.

Die Erfindung ist demgemäß nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Tanksystem für ein Fahrzeug (1), umfassend einen ersten und einen zweiten Druckbehälter (5, 6), die an verschiedenen Stellen eines Chassis (3) des Fahrzeugs (1), insbesondere an gegenüberliegenden Seiten des Chassis (3), montierbar sind, wobei zumindest eine Anschlussleitung (9, 18, 21) des zweiten Behälters (6) zu jener Stelle des Chassis (3), an der sich der erste Behälter (5) befindet, geführt ist und in einer dort zugänglichen Armatur (14, 17, 19, 20) mündet,
**dadurch gekennzeichnet,**
**dass** sich die Armatur (14, 17, 19, 20) zumindest teilweise in einem Zwickel (15a - 15f) befindet, der zwischen dem ersten Behälter (5) und dem kleinstmöglichen, den ersten Behälter (5) umschreibenden, gedachten Quader (16) eingeschlossen ist.

2. Tanksystem nach Anspruch 1, **dadurch gekennzeichnet, dass** die zumindest eine Anschlussleitung (9, 18, 21) im Bereich des ersten Behälters (5) durch den genannten Zwickel (15a - 15f) hindurchgeführt ist.

3. Tanksystem nach Anspruch 1 oder 2, **dadurch gekennzeichnet, dass** der erste Behälter (5) eine erste kalottenförmige Endkappe (12) hat und der genannte Zwickel (15a) zwischen dieser und dem Quader (16) eingeschlossen ist.

4. Tanksystem nach Anspruch 3, **dadurch gekennzeichnet, dass** der erste Behälter (5) eine der ersten gegenüberliegende zweite kalottenförmige Endkappe (13) hat und sich zumindest eine weitere Armatur (29, 30, 31, 39) zumindest einer mit dem ersten Behälter (5) verbundenen weiteren Anschlussleitung (36, 37, 38) in einem weiteren Zwickel (15b) befindet, der zwischen der zweiten Endkappe (13) und dem Quader (16) eingeschlossen ist.

5. Tanksystem nach einem der Ansprüche 1 oder 2, **dadurch gekennzeichnet, dass** der erste Behälter (5) einen allgemein-zylindrischen, bevorzugt kreiszylindrischen, Mantel (11) hat und der genannte Zwickel (15c - 15f) zwischen diesem und dem Quader (16) eingeschlossen ist.

6. Tanksystem nach Anspruch 5, **dadurch gekennzeichnet, dass** sich zumindest eine weitere Armatur (29, 30, 31, 39) zumindest einer mit dem ersten Behälter (5) verbundenen weiteren Anschlussleitung (36, 37, 38) in dem genannten Zwickel (15c - 15f) befindet.

7. Tanksystem nach einem der Ansprüche 1 bis 6, **dadurch gekennzeichnet, dass** die zumindest eine Armatur (14, 17, 19, 20) von einem am Fahrzeugchassis (3) montierbaren Träger getragen ist.

8. Tanksystem nach einem der Ansprüche 1 bis 6, **dadurch gekennzeichnet, dass** die zumindest eine Armatur (14, 17, 19, 20) von einem am ersten Behälter (5) befestigten Träger (22) getragen ist.

9. Tanksystem nach Anspruch 8 in Verbindung mit Anspruch 3 oder 4, **dadurch gekennzeichnet, dass** der Träger (22) an der Endkappe (12) montiert und mit einer bevorzugt D-förmigen Abdeckplatte (24) mit Seitenwänden (23) ausgestattet ist, die die Armatur (14, 17, 19, 20) übergreift, welche durch eine Öffnung (25, 26, 27, 28) in einer Seitenwand (23) zugänglich ist.

10. Tanksystem nach Anspruch 8 in Verbindung mit Anspruch 5 oder 6, **dadurch gekennzeichnet, dass** der Träger (22) an dem Mantel (11) montiert und mit einer L-förmigen Abdeckplatte (34) mit Seitenwänden (35) ausgestattet ist, die die Armatur (14, 17, 19, 20) übergreift, welche durch eine Öffnung in der Abdeckplatte (34) zugänglich ist.

11. Tanksystem nach einem der Ansprüche 1 bis 10, **dadurch gekennzeichnet, dass** der zweite Behälter (6) ein LNG-Drucktank ist, wobei für den zweiten Behälter (6) drei Anschlussleitungen (9, 18, 21) vorgesehen sind, von denen die erste als Armatur eine Befüllkupplung (14), die zweite eine Druckanzeige (17) und die dritte einen Ventanschluss (19) mit vorgeschaltetem Handventil (20) hat.

12. Tanksystem nach einem der Ansprüche 1 bis 10, **dadurch gekennzeichnet, dass** der zweite Behälter (6) durch einen oder ein Bündel von CNG-Drucktanks gebildet ist, wobei für den zweiten Behälter (6) zwei Anschlussleitungen (9, 18) vorgesehen sind, von denen die erste als Armatur eine Befüllkupplung (14) und die zweite eine Druckanzeige (17) hat.

## Claims

1. Tank system for a vehicle (1), comprising a first and a second pressure container (5, 6), which are mountable at different positions on a chassis (3) of the vehicle (1), in particular on opposite sides of the chassis (3), wherein at least one connection line (9, 18, 21) of the second container (6) is led to the position on the chassis (3) at which the first container (5) is located and ends in an armature (14, 17, 19, 20), which is accessible there,
**characterised in that**
the armature (14, 17, 19, 20) is at least partially located in a gusset (15a - 15f) that is enclosed between the first container (5) and the smallest possible imaginary cuboid that circumscribes the first container (5).

2. Tank system according to claim 1, **characterised in that**, in the area of the first container (5), the at least one connection line (9, 18, 21) is led through said gusset (15a - 15f).

3. Tank system according to claim 1 or 2, **characterised in that** the first container (5) has a first end cap (12) in the form of a calotte and said gusset (15a) is enclosed between the end cap and the cuboid (16).

4. Tank system according to claim 3, **characterised in that** the first container (5) has, on the side opposite of the first end cap, a second end cap (13) in the form of a calotte and at least one further armature (20, 30, 31, 39) of at least one further connection line (36, 37, 38) connected to the first container (5) is located in a further gusset (15b) that is enclosed between the second end cap (13) and the cuboid (16).

5. Tank system according one of the claims 1 or 2, **characterised in that** the first container (5) has a generally cylindrical, preferably circularly cylindrical, jacket (11) and said gusset (15c - 15f) is enclosed between the jacket and the cuboid (16).

6. Tank system according to claim 5, **characterised in that** at least one further armature (29, 30, 31, 39) of at least one further connection line (36, 37, 38) that is connected to the first container (5) is located in said gusset (15c - 15f).

7. Tank system according to any one of claims 1 to 6, **characterised in that** the at least one armature (14, 17, 19, 20) is carried by a carrier that is mountable on the chassis (3) of the vehicle.

8. Tank system according to any one of claims 1 to 6, **characterised in that** the at least one armature (14, 17, 19, 20) is carried by a carrier (22) that is mounted on the first container (5).

9. Tank system according to claim 8 in connection with claim 3 or 4, **characterised in that** the carrier (22) is mounted on the end cap (12) and is equipped with a preferably D-shaped cover plate (24) with side walls (23), wherein the cover plate covers the armature (14, 17, 19, 20), which is accessible through an opening (25, 26, 27, 28) in a side wall (23).

10. Tank system according to claim 8 in connection with claim 5 or 6, **characterised in that** the carrier (22) is mounted on the jacket (11) and is equipped with an L-shaped cover plate (34) with side walls (35), wherein the cover plate covers the armature (14, 17, 19, 20), which is accessible through an opening (25, 26, 27, 28) in the cover plate (34).

11. Tank system according to any one of claims 1 to 10, **characterised in that** the second container (6) is an LNG pressure tank, wherein for the second container (6) three connection lines (9, 18, 21) are provided, of which the first has a filler coupling (14) as armature, the second a pressure gauge (17), and the third a vent connection (19) with a hand valve (20) connected upstream thereof.

12. Tank system according to any one of claims 1 to 10, **characterised in that** the second container (6) is composed of one or a bundle of CNC pressure tank/s, wherein for the second container (6) two connection lines (9, 18) are provided, of which the first has a filler coupling (14) as armature and the second a pressure gauge (17).

## Revendications

1. Système de réservoir pour un véhicule (1), comprenant un premier et un deuxième récipient sous pression (5, 6) qui peuvent être montés à différents endroits d'un châssis (3) du véhicule (1), notamment sur des côtés opposés du châssis (3), où au moins une conduite de raccordement (9, 18, 21) du deuxième récipient (6) est menée à l'endroit du châssis (3) où se situe le premier récipient (5) et débouche dans une armature (14, 17, 19, 20) accessible à cet endroit,
**caractérisé en ce**
**que** l'armature (14, 17, 19, 20) se situe au moins partiellement dans un soufflet (15a à 15f) qui est compris entre le premier récipient (5) et le plus petit parallélépipède (16) possible imaginable circonscrivant le premier récipient (5).

2. Système de réservoir selon la revendication 1, **caractérisé en ce que** l'au moins une conduite de raccordement (9, 18, 21) dans la région du premier récipient (5) traverse ledit soufflet (15a à 15f).

3. Système de réservoir selon la revendication 1 ou 2, **caractérisé en ce que** le premier récipient (5) a un premier capuchon d'extrémité (12) en forme de calotte et ledit soufflet (15a) est compris entre celui-ci et le parallélépipède (16).

4. Système de réservoir selon la revendication 3, **caractérisé en ce que** le premier récipient (5) a un deuxième capuchon d'extrémité (13) en forme de calotte situé en face du premier et qu'au moins une autre armature (29, 30, 31, 39) d'au moins une autre conduite de raccordement (36, 37, 38) reliée avec le premier récipient (5) se trouve dans un autre soufflet (15b) qui est compris entre le deuxième capuchon d'extrémité (13) et le parallélépipède (16).

5. Système de réservoir selon l'une des revendications 1 ou 2, **caractérisé en ce que** le premier récipient (5) a une enveloppe (11) généralement cylindrique, de préférence cylindrique circulaire, et ledit soufflet (15c à 15f) est compris entre celle-ci et le parallélépipède (16).

6. Système de réservoir selon la revendication 5, **caractérisé en ce qu'**au moins une autre armature (29, 30, 31, 39) d'au moins une autre conduite de raccordement (36, 37, 38) reliée avec le premier récipient (5) se trouve dans ledit soufflet (15c à 15f).

7. Système de réservoir selon l'une des revendications 1 à 6, **caractérisé en ce que** l'au moins une armature (14, 17, 19, 20) est portée par un support pouvant être monté sur le châssis de véhicule (3).

8. Système de réservoir selon l'une des revendications 1 à 6, **caractérisé en ce que** l'au moins une armature (14, 17, 19, 20) est portée par un support (22) fixé sur le premier récipient (5).

9. Système de réservoir selon la revendication 8 en conjonction avec la revendication 3 ou 4, **caractérisé en ce que** le support (22) est monté sur le capuchon d'extrémité (12) et est équipé avec une plaque de couverture (24) de préférence en forme de D avec des parois latérales (23), qui est en prise au dessus de l'armature (14, 17, 19, 20), laquelle est accessible par une ouverture (25, 26, 27, 18) dans une paroi latérale (23).

10. Système de réservoir selon la revendication 8 en conjonction avec la revendication 5 ou 6, **caractérisé en ce que** le support (22) est monté sur l'enveloppe (11) et est équipé avec une plaque de couverture (34) en forme de L avec des parois latérales (35), qui est en prise au dessus de l'armature (14, 17, 19, 20), laquelle est accessible par une ouverture dans la plaque de couverture (34).

11. Système de réservoir selon l'une des revendications 1 à 10, **caractérisé en ce que** le deuxième récipient (6) est un réservoir sous pression de stockage de gaz naturel liquéfié, LNG, où trois conduites de raccordement (9, 18, 21) sont prévues pour le deuxième récipient (6), parmi lesquelles la première a un raccord de remplissage (14) en tant qu'armature, la deuxième a un afficheur de pression (17) et la troisième a un raccord de ventilation (19) avec une soupape manuelle (20) située devant la soupape.

12. Système de réservoir selon l'une des revendications 1 à 10, **caractérisé en ce que** le deuxième récipient (6) est formé par un ou un ensemble de réservoir(s) sous pression de gaz naturel compressé, CNG, où deux conduites de raccordement (9, 18) sont prévues pour le deuxième récipient (6), parmi lesquelles la première a un raccord de remplissage (14) en tant qu'armature et la deuxième a un afficheur de pression (17).
